# EUROPÄISCHE PATENTANMELDUNG

(11) **EP 3 346 146 A1**
(43) Veröffentlichungstag der Anmeldung: **11.07.2018**
(21) Anmeldenummer: 17150334.5
(22) Anmeldetag: 05.01.2017
(51) Int. Cl.: F16B 13/06, F16B 31/02, F16B 37/14

(54) **BRUCHMUTTER MIT BRUCHFLÄCHE MIT GROSSEM ÖFFNUNGSWINKEL**

(71) Anmelder: HILTI Aktiengesellschaft, 9494 Schaan (LI)
(72) Erfinder: Shimahara, Hideki, 9472 Grabs (CH); Infanger, Erich, 7220 Schiers (CH)
(74) Vertreter: Hilti Aktiengesellschaft Corporate Intellectual Property

(57) **Zusammenfassung**

Die Erfindung betrifft eine Vorrichtung zur Drehmomentbegrenzung mit einer Mutter mit zumindest einem Innengewinde und einem Halteelement, wobei das Halteelement in einem rückwärtigen Bereich des Halteelements ein Kopfteil mit einem Mitnahmeprofil zur drehfesten Kopplung des Kopfteils mit einem Setzwerkzeug aufweist, das Halteelement in einem vorderen Bereich des Halteelements ein Aufnahmeteil mit einer Aufnahme aufweist, in welcher die Mutter drehfest aufgenommen ist, das Kopfteil einen Durchgang aufweist, durch den eine in die Mutter eingeschraubte Gewindestange entlang der Längsachse der Vorrichtung durch das Kopfteil hindurch aus dem Halteelement herausführbar ist, und das Halteelement zumindest einen Steg aufweist, welcher das Aufnahmeteil und das Kopfteil verbindet, und welcher eine Sollbruchstelle bildet. Erfindungsgemäss ist vorgesehen, dass in zumindest einer Längsschnittsebene der Vorrichtung die kleinste Wandstärke des zumindest einen Steges auf einer Wandstärken-Minimum-Strecke gegeben ist, welche unter einem Winkel grösser 45° zu der Längsachse der Vorrichtung verläuft. Die Erfindung betrifft ferner eine Befestigungsanordnung, welche eine solche Vorrichtung enthält.

## Beschreibung

Die Erfindung betrifft eine Vorrichtung zur Drehmomentbegrenzung gemäss dem Oberbegriff des Anspruchs 1. Ein solche Vorrichtung weist eine Mutter und ein Halteelement auf, wobei das Halteelement in einem rückwärtigen Bereich des Halteelements ein Kopfteil mit einem Mitnahmeprofil zur drehfesten Kopplung des Kopfteils mit einem Setzwerkzeug aufweist, das Halteelement in einem vorderen Bereich des Halteelements ein Aufnahmeteil mit einer Aufnahme aufweist, in welcher die Mutter drehfest aufgenommen ist, das Kopfteil einen Durchgang aufweist, durch den eine in die Mutter eingeschraubte Gewindestange entlang der Längsachse der Vorrichtung durch das Kopfteil hindurch aus dem Halteelement herausführbar ist, und das Halteelement zumindest einen Steg aufweist, welcher das Aufnahmeteil und das Kopfteil verbindet, und welcher eine Sollbruchstelle bildet. Die Erfindung betrifft ferner eine Befestigungsanordnung, welche eine solche Vorrichtung und einen Spreizanker enthält.

Aus der DE 102010043167 A1 ist eine gattungsgemässe Vorrichtung zur Drehmomentbegrenzung bekannt, die in Verbindung mit Spreizankern verwendet werden kann, und die eine Sollbruchstelle aufweist, welche beim Erreichen eines Grenzdrehmoments bricht. Gemäss DE 102010043167 A1 weist die Vorrichtung am Kopfteil einen Axialanschlag zur drehentkoppelten Axialkraftübertragung vom Kopfteil auf die Mutter auf, so dass die Sollbruchstelle beim Einhämmern geschont wird.

Weitere Vorrichtungen zur Drehmomentbegrenzung für Spreizanker sind in der EP 1353080 B1 und in der Internationalen Patentanmeldung mit dem PCT-Aktenzeichen PCT/EP2016/072232 beschrieben.

Andere Vorrichtungen zur Drehmomentbegrenzung, die auf Muttern oder Bolzenköpfe aufgesteckt werden können, sind aus der FR 2598855 A1 und der US 4215600 A bekannt.

Aus der DE 102011106696 A1 geht eine Schraube mit einem mehrteiligen Kopf hervor, welcher eine äussere Hülse aufweist, die um ein Innenteil des Kopfs herum drehbar ist.

Aufgabe der Erfindung ist es, eine Vorrichtung zur Drehmomentbegrenzung anzugeben, welche bei geringem Aufwand, insbesondere Herstellungsaufwand, eine besonders gute Bruchpräzision und Zuverlässigkeit gewährleistet, insbesondere im Hinblick auf die Verwendung der Vorrichtung im Zusammenhang mit Spreizankern, sowie eine entsprechende Befestigungsanordnung anzugeben.

Die Aufgabe wird erfindungsgemäss durch eine Vorrichtung zur Drehmomentbegrenzung mit den Merkmalen des Anspruchs 1 und eine Befestigungsanordnung mit den Merkmalen des Anspruchs 8 gelöst. Bevorzugte Ausführungsformen der Vorrichtung sind in den abhängigen Ansprüchen angegeben.

Eine erfindungsgemässe Vorrichtung zur Drehmomentbegrenzung ist dadurch gekennzeichnet, dass in zumindest einer Längsschnittsebene der Vorrichtung die kleinste Wandstärke des zumindest einen Steges auf einer Wandstärken-Minimum-Strecke gegeben ist, welche unter einem Winkel α, insbesondere einem spitzen Winkel α, grösser 45° zu der Längsachse der Vorrichtung verläuft.

Die Erfindung basiert auf der Erkenntnis, dass es bei der Verwendung von gattungsgemässen Vorrichtungen zur Drehmomentbegrenzung, die in ihrem Kopfteil einen Durchgang für die Gewindestange aufweisen, zu besonderen Lastsituationen kommen kann, welche unter Umständen Auswirkungen auf die Bruchpräzision der Sollbruchstelle haben können. Insbesondere können derartige Vorrichtungen in Kombination mit Spreizankern eingesetzt werden, welche häufig in der sogenannten Durchsteckmontage montiert werden. Bei dieser Art der Montage ist die Mutter der Vorrichtung bereits zu Beginn des Montagevorgangs auf die Gewindestange des Spreizankers geschraubt und der Spreizanker wird bei aufgeschraubter Vorrichtung mittels Hammerschlägen, welche auf die Rückseite der Gewindestange aufgebracht werden, durch ein Anbauteil hindurch in ein Bohrloch eingetrieben. Die Erfindung hat weiterhin erkannt, dass es, insbesondere aufgrund der nicht vernachlässigbaren Massen der Bestandteile des Halteelements, bei den Hammerschlägen zu axialen Trägheitskräften und anderen Belastungen zwischen dem regelmässig relativ freien Kopfteil einerseits und dem mit der Mutter und damit dem Spreizanker verbundenen Aufnahmeteil andererseits kommen kann. Diese Belastungen können wiederum eine vorzeitige Schwächung der Stege und damit eine unerwünschterweise vergleichsweise grosse Streuung der Grenzdrehmomente zur Folge haben, an denen die Stege abscheren. Hier setzt die Erfindung an und schlägt vor, die Stege so zu dimensionieren, dass die Wandstärken-Minimum-Strecke, welche in der Längsschnittsebene die minimale Wandstärke des jeweiligen Steges definiert, also die in der Längsschnittsebene kürzeste Verbindungsstrecke zwischen Innenseite und Aussenseite des Halteelements, mit einem vergleichsweise grossen Winkel, insbesondere vergleichsweise grossen spitzen Winkel, zur Längsachse der Vorrichtung, nämlich grösser als 45° zur Längsachse, vorzugsweise grösser als 50° oder 55° zur Längsachse, angeordnet ist. Da die minimale Wandstärke regelmässig zumindest annähernd die Bruchstelle definiert, weist auch die beim Bruch entstehende Bruchfläche zwischen Kopfteil und Aufnahmeteil einen entsprechend grossen Öffnungswinkel auf. Es wurde in überraschender Weise erkannt, dass durch eine solche Anordnung der Einfluss der aus den Hammerschlägen resultierenden Kräfte auf das Bruchverhalten der Stege deutlich reduziert werden kann, so dass bei geringem Aufwand besonders genaue Vorrichtungen zur Drehmomentbegrenzung mit besonders geringer Streuung in den Grenzdrehmomenten erhalten werden können.

In fachüblicher Weise kann unter einer Längsschnittsebene insbesondere eine Schnittebene verstanden werden, in welcher die Längsachse verläuft. Unter der Längsachse der Vorrichtung kann insbesondere diejenige Achse verstanden werden, entlang derer die in die Mutter eingeschraubte Gewindestange verläuft und/oder diejenige Achse, in der das Drehmoment gerichtet ist, das mittels des Mitnahmeprofils auf das Kopfteil aufgebracht wird. Entsprechend der fachüblichen Definition kann die Längsachse insbesondere eine zumindest annähernde Symmetrieachse der Vorrichtung sein.

Unter einer Strecke kann in fachüblicher Weise eine gerade Linie, die von zwei Punkten begrenzt wird, also ein Abschnitt einer Geraden, verstanden werden. Die WandstärkenMinimum-Strecke ist diejenige von der Aussenseite zur Innenseite des Halteelements verlaufende Strecke, an der die Wandstärke, also der Abstand zwischen Aussenseite und Innenseite des Halteelements, minimal ist. Der Steg ist zwischen dem Kopfteil und dem Aufnahmeteil angeordnet und verbindet das Kopfteil und das Aufnahmeteil miteinander. Da der Steg massiv ist, ist die Länge seiner Wandstärken-Minimum-Strecke grösser null.

In fachüblicher Weise soll unter dem Winkel α, unter dem die Wandstärken-Minimum-Strecke zur Längsachse der Vorrichtung verläuft, insbesondere der kleinere der beiden Nebenwinkel verstanden werden, das heisst insbesondere der spitze Winkel. Mit anderen Worten ist vorgesehen, dass die Wandstärken-Minimum-Strecke unter einem Winkel α grösser 45° und kleiner oder gleich 90°, insbesondere kleiner 90°, zu der Längsachse der Vorrichtung verläuft, das heisst 45° < α <= 90°, vorzugsweise 45° < α <= 90°. Der Winkel α kann insbesondere ein Schnittwinkel sein. Vorzugsweise konvergiert der Winkel α nach vorne hin, das heisst der Abstand der Wandstärken-Minimum-Strecke von der Längsachse nimmt nach vorne hin, das heisst insbesondere mit zunehmendem Abstand vom Kopfteil, ab und/oder der Winkel α ist nach hinten hin offen. Grundsätzlich ist aber auch eine inverse Anordnung denkbar, bei der der Winkel α nach hinten hin konvergiert.

Die Mutter kann beispielsweise eine DIN-Mutter sein. Sie weist eine Durchgangsöffnung, insbesondere mit zumindest einem Innengewinde, auf, in welches die Gewindestange einschraubbar ist.

Das Mitnahmeprofil dient zum drehfesten Ankoppeln des Abtriebs des Setzwerkzeugs an das Kopfteil und insbesondere zum Aufbringen eines Drehmoments vom Setzwerkzeug auf das Kopfteil, insbesondere eines in Axialrichtung gerichteten Drehmoments. Das Mitnahmeprofil kann zum Beispiel ein Aussenmehrkantprofil, insbesondere ein Aussensechskantprofil, sein, das umfangsseitig am Kopfteil angeordnet ist. Das Setzwerkzeug kann beispielsweise ein Schraubenschlüssel oder eine Handmaschine sein.

Die Aufnahme kann insbesondere eine im Aufnahmeteil gebildete Ausnehmung sein, in welche die Mutter eingelegt ist. Die Aufnahme ist vorzugsweise umfangsseitig durch das Aufnahmeteil begrenzt und/oder rückseitig durch das Kopfteil begrenzt. Das Aufnahmeteil bildet vorzugsweise eine Hülse, welche die Aufnahme umgibt und welche somit auch die Mutter zumindest bereichsweise umgibt. Die Mutter ist drehfest in der Aufnahme angeordnet, insbesondere mit dem Aufnahmeteil drehfest in der Aufnahme angeordnet, das heisst zwischen dem Aufnahmeteil und der in der Aufnahme angeordneten Mutter besteht eine Verbindung, vorzugsweise eine Formschlussverbindung, welche eine Übertragung eines Drehmoments, insbesondere eines axial gerichteten Drehmoments, zwischen Aufnahmeteil und Mutter ermöglicht. Vorzugsweise kann die Aufnahme für die drehfeste Verbindung zwischen Aufnahmeteil und Mutter ein weiteres Mitnahmeprofil, beispielsweise ein Innenmehrkantprofil, insbesondere ein Innensechskantprofil, aufweisen, welches mit einem Aussenprofil der Mutter korrespondiert.

Das Kopfteil weist einen Durchgang für die Gewindestange auf, das heisst das Kopfteil ist insbesondere hülsenförmig ausgebildet. Die mit der Mutter korrespondierende und bestimmungsgemäss in die Mutter eingeschraubte Gewindestange kann somit auf der rückwärtigen Seite des Halteelements aus dem Halteelement heraustreten, das heisst die Gewindestange ist durch die Vorrichtung hindurchführbar, insbesondere entlang der Längsachse der Vorrichtung durch die Vorrichtung hindurchführbar. Insbesondere können das Kopfteil und das Aufnahmeteil koaxial angeordnete Hülsen bilden, vorzugsweise mit der Längsachse koaxial angeordnete Hülsen.

Der zumindest eine Steg, welcher das Aufnahmeteil und das Kopfteil verbindet, oder, sofern mehrere solcher Stege vorgesehen sind, die Stege bildet beziehungsweise bilden eine Sollbruchstelle, insbesondere eine Sollbruchstelle für eine Drehung um die Längsachse, das heisst der Steg beziehungsweise die Stege bricht beziehungsweise brechen unter Aufhebung der Verbindung zwischen Kopfteil und Aufnahmeteil vorrangig. Unter vorrangigem Brechen kann insbesondere verstanden werden, dass der Steg beziehungsweise die Stege bei einem geringeren Drehmoment bricht beziehungsweise brechen als das Kopfteil und als das Aufnahmeteil.

Die Richtungsangaben vorne, hinten, vorderseitig, rückwärtig usw. sollen hier einheitlich verwendet werden. Somit ist beispielsweise die Vorderseite der Mutter der Rückseite der Mutter in derselben Richtung vorgelagert wie das im vorderen Bereich des Halteelements angeordnete Aufnahmeteil dem im rückwärtigen Bereich des Halteelements angeordneten Kopfteil. Insbesondere kann unter der rückseitigen Stirnseite der Aufnahme diejenige Seite der Aufnahme verstanden werden, welche dem Kopfteil zugewandt ist. Soweit hier von einer Axialrichtung und Radialrichtung die Rede ist soll sich dies insbesondere auf die Längsachse beziehen.

Besonders vorteilhaft ist es, dass in einer Vielzahl von Längsschnittsebenen der Vorrichtung die kleinste Wandstärke des zumindest einen Steges jeweils auf einer Wandstärken-Minimum-Strecke gegeben ist, welche unter einem Winkel, insbesondere spitzen Winkel, grösser 45°, 55° oder 60° zu der Längsachse der Vorrichtung verläuft. Die Wandstärken-Minimum-Strecken des zumindest einen Steges können also vorzugsweise in mehrere Längsschnittsebenen der Vorrichtung im erfindungsgemässen Winkelbereich grösser 45°, 55° oder 60° und kleiner gleich 90°, vorzugsweise kleiner 90° zu der Längsachse der Vorrichtung liegen. Demgemäss weist die Bruchfläche des zumindest einen Steges mehrere Bruchlinien auf, welche im erfindungsgemässen Winkelbereich zu der Längsachse der Vorrichtung verlaufen. Hierdurch kann die Lastaufnahme weiter verbessert werden.

Die Vorrichtung kann auch weitere Stege aufweisen, die vorzugsweise in Analogie zum zumindest einen Steg ausgeführt sind, beispielsweise zwei weitere Stege. Insbesondere können die Wandstärken-Minimum-Strecken der weiteren Stege analog zum zumindest einen Steg ausgeführt sein.

Eine bevorzugte Weiterbildung der Erfindung liegt darin, dass in der zumindest einen Längsschnittsebene der Vorrichtung die Wandstärken-Minimum-Strecke an der Aufnahme, insbesondere an der rückwärtigen Stirnseite der Aufnahme, endet. Demgemäss schliesst sich also das Wandstärkeminimum an die Aufnahme des Aufnahmeteils, insbesondere an die Rückseite der Aufnahme, an. In dieser Ausgestaltung kann das Halteelement in besonders einfacher Weise hinterschneidungsfrei ausgestaltet werden, was beispielsweise eine besonders einfache und günstige Fertigung in einem Gussverfahren erlaubt.

Insbesondere kann vorgesehen werden, dass das Halteelement zumindest eine Nut aufweist, welche sich ausgehend von der Aufnahme in das Halteelement erstreckt, und welche entlang des zumindest einen Steges verläuft, wobei die Wandstärken-Minimum-Strecke an der Nut endet. Es ist also eine längliche Vertiefung im Halteelement vorgesehen, an welche sich das Wandstärkeminimum anschliesst. Dies kann einerseits eine besonders einfache Konstruktion des Halteelements und/oder eine besonders einfache Fertigung ermöglichen. Darüber hinaus kann die Nut aufgrund der Kerbwirkung die Präzision der Bruchvorgangs erhöhen. Die Nut, das heisst die längliche Vertiefung, ist vorzugsweise gerade ausgebildet. Insbesondere kann die Nut an der rückwärtigen Stirnseite der Aufnahme angeordnet sein, was abermals eine hinterschneidungsfrei Ausgestaltung und somit eine besonders einfache und günstige Fertigung in einem Gussverfahren erlauben kann.

Geeigneterweise weist das Kopfteil einen Axialanschlag auf, welcher einen rückwärtigen Anschlag für die Mutter bildet. Dieser Axialanschlag kann beispielsweise durch Vorsprünge oder einen Ring gebildet sein, welche beziehungsweise welcher am Kopfteil zur Aufnahme hin vorstehen beziehungsweise vorsteht. Da der Axialanschlag eine zusätzliche, vorzugsweise unmittelbare und insbesondere drehentkoppelte Kraftübertagung zwischen Kopfteil und Mutter ermöglichen kann, kann durch den Axialanschlag der zumindest eine Steg weiter entlastet werden und somit die Präzision und die Zuverlässigkeit noch weiter gesteigert werden, ohne das Grenzdrehmoment wesentlich zu beinträchtigen. Da der Axialanschlag dem Kopfteil zugeordnet ist, kann insbesondere vorgesehen sein, dass der zumindest eine Steg zwischen dem Kopfteil mit dem Axialanschlag einerseits und dem Aufnahmeteil anderseits angeordnet ist. Für eine besonders kompakte, gut zu fertigende und im Hinblick auf die Kraftübertragung vorteilhafte Ausgestaltung ist vorzugsweise vorgesehen, dass die Nut an den zumindest einen Axialanschlag angrenzt.

Besonders bevorzugt ist es, dass die Wandstärke des zumindest einen Steges in der zumindest einen Längsschnittsebene der Vorrichtung ein eindeutiges Minimum aufweist. Insbesondere verlaufen die Innenseite und die Aussenseite also am Steg im Bereich des Wandstärkeminimums nicht-parallel zueinander. Hierdurch kann in besonders einfacher Weise die Bruchstelle besonders gut definiert werden, was unter anderem im Hinblick auf die Präzision vorteilhaft sein kann.

Zweckmässigerweise ist das Halteelement ein Gussteil, vorzugsweise ein Zinkdruckgussteil. Dies ist im Hinblick auf den Herstellungsaufwand vorteilhaft. Darüber hinaus können besonders gut definierte Bruchflächen erhalten werden sein. Vorzugsweise sind zumindest ein Teil des Aufnahmeteils, der zumindest eine Steg und zumindest ein Teil des Kopfteils monolithisch ausgebildet, was den Herstellungsaufwand weiter reduzieren kann. Das Kopfteil kann auch mehrteilig ausgebildet sein und eine separate Hülse aus duktilem Material aufweisen, an welcher das Mitnahmeprofil ausgebildet ist.

Die Erfindung betrifft auch eine Befestigungsanordnung bestehend aus einem Spreizanker und einer erfindungsgemässen Vorrichtung zur Drehmomentbegrenzung, wobei die Mutter der Vorrichtung auf eine Gewindestange des Spreizankers aufgeschraubt ist. Unter einem Spreizanker kann in fachüblicher Weise insbesondere ein Anker verstanden werden, welcher ein Spreizelement, beispielsweise eine Spreizhülse aufweist, das zum Verankern bei Zug in der Gewindestange radial nach aussen versetzt wird.

Merkmale die im Zusammenhang mit den erfindungsgemässen Vorrichtungen zur Drehmomentbegrenzung erläutert werden, können auch bei den erfindungsgemässen Befestigungsanordnungen zum Einsatz kommen, so wie auch umgekehrt Merkmale die im Zusammenhang mit den erfindungsgemässen Befestigungsanordnungen erläutert werden auch bei erfindungsgemässen Vorrichtungen zur Drehmomentbegrenzung zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform einer erfindungsgemässen Vorrichtung zur Drehmomentbegrenzung mit Blick auf die Vorderseite der Vorrichtung;
- Figur 2:: eine perspektivische Darstellung der Vorrichtung aus Figur 1 mit Blick auf die Rückseite der Vorrichtung;
- Figur 3:: eine Längsschnittansicht der Vorrichtung zur Drehmomentbegrenzung aus Figur 1 und 2, also eine Schnittansicht in einer Längsschnittsebene der Vorrichtung;
- Figur 4:: eine Ansicht des Halteelements der Vorrichtung zur Drehmomentbegrenzung aus den Figuren 1 bis 3 ohne Mutter von unten;
- Figur 5:: eine Befestigungsanordnung bestehend aus einer Vorrichtung zur Drehmomentbegrenzung gemäss Figuren 1 bis 4 und einem Spreizanker in perspektivischer Ansicht mit Blick auf die Rückseite der Vorrichtung zur Drehmomentbegrenzung;
- Figur 6:: die Befestigungsanordnung gemäss Figur 5 in teilgeschnittener Längsschnittansicht;
- Figur 7:: das Halteelement der Vorrichtung zur Drehmomentbegrenzung aus den Figuren 1 bis 4 samt Mutter nach dem Abreissen des Kopfteils bei Erreichen des Grenzdrehmoments in perspektivischer Ansicht von oben; und
- Figur 8: das Halteelement der Vorrichtung zur Drehmomentbegrenzung aus den Figuren 1 bis 4 samt Mutter nach dem Abreissen des Kopfteils bei Erreichen des Grenzdrehmoments in teilweiser Längsschnittsansicht analog Figur 3.

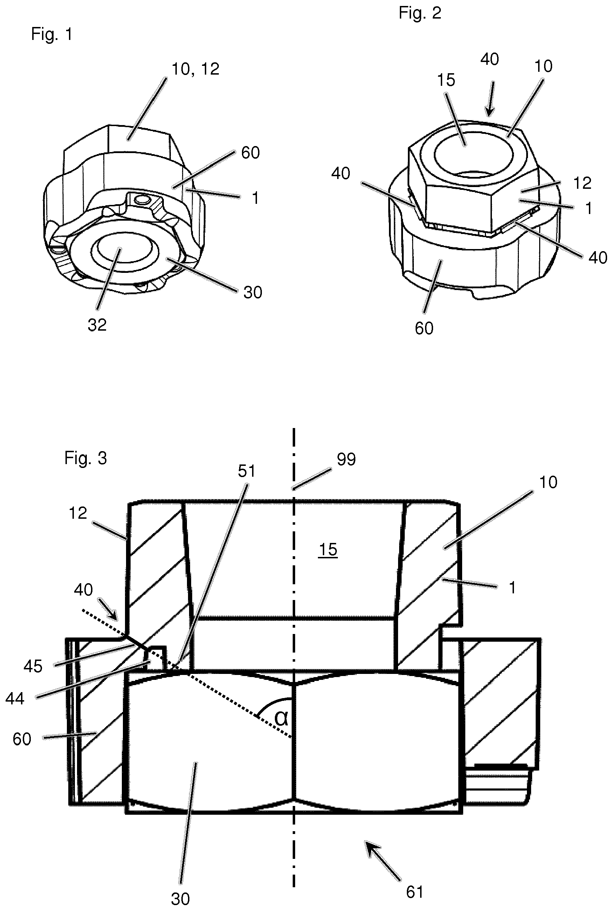

Die Figuren zeigen ein Ausführungsbeispiel einer erfindungsgemässen Vorrichtung zur Drehmomentbegrenzung. Wie die Figuren zeigen weist die Vorrichtung zum einen eine Mutter 30 mit einem Innengewinde 32 und zum anderen ein kronenförmiges Halteelement 1 auf, in welchem die Mutter 30 gehalten ist. Das Halteelement 1 wiederum weist in seinem rückwärtigen Bereich ein Kopfteil 10, in seinem vorderen Bereich ein dem Kopfteil 10 nach vorne hin vorgelagertes Aufnahmeteil 60 sowie beispielhaft drei Stege 40 auf. Die Stege 40 verbinden das Kopfteil 10 und das Aufnahmeteil 60 und bilden Mittel zur Drehmomentübertragung vom Kopfteil 10 auf das Aufnahmeteil 60. Die Stege 40 erstrecken sich ausgehend vom Kopfteil 10 radial nach aussen zum Aufnahmeteil 60 hin, welches aussendurchmessergrösser als das Kopfteil 10 ist. Der in Figur 2 hinten verdeckt liegende Steg 40 ist in Analogie zu den beiden in Figur 2 sichtbaren Stegen 40 ausgebildet.

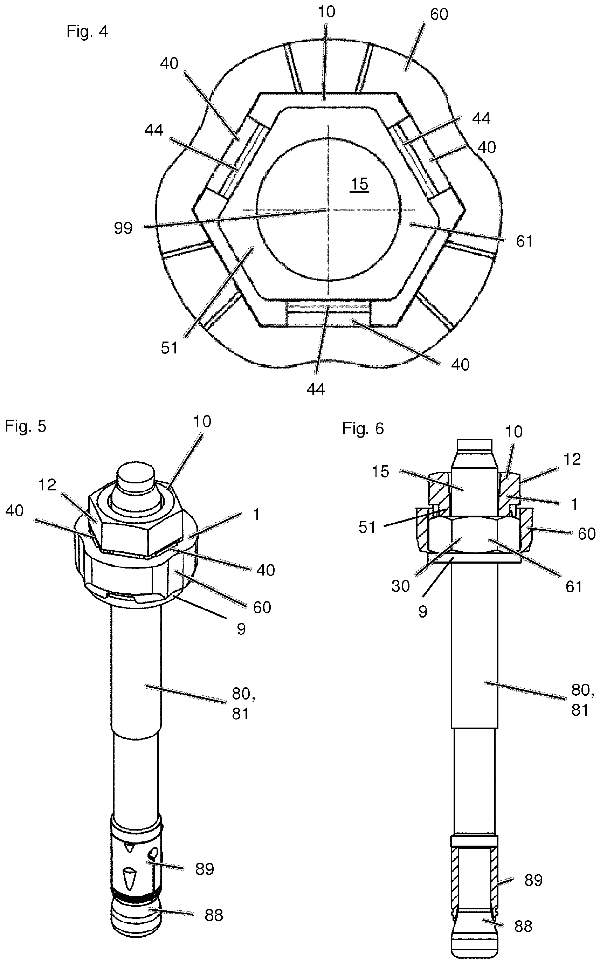

Im Aufnahmeteil 60 ist eine Aufnahme 61 ausgebildet, in welcher die Mutter 30 aufgenommen ist. Zur formschlüssigen Drehmomentübertragung vom Aufnahmeteil 60 auf die Mutter 30 weist das Aufnahmeteil 60 an der Aufnahme 61 ein Innensechskantprofil auf, welches insbesondere in Figur 4 erkennbar ist, und welches mit einem Aussensechskantprofil der Mutter 30 korrespondiert. Anstelle eine Sechskants kann auch ein anderes Mehrkantprofil vorgesehen sein. Zusätzlich oder alternativ kann auch eine reibschlüssige drehfeste Verbindung vorhanden sein.

Das Kopfteil 10 weist ein, beispielsweise als Aussensechskantprofil ausgebildetes, Mitnahmeprofil 12 auf, mittels dem ein Drehmoment von einem nicht dargestellten Setzwerkzeug formschlüssig auf das Kopfteil 10 übertragen werden kann. Das Aufnahmeteil 60 und das Kopfteil 10 sind koaxial angeordnet und definieren eine gemeinsame Längsachse 99 der Vorrichtung. Das Kopfteil 10 weist einen Durchgang 15 auf, welcher mit der Aufnahme 61 des Aufnahmeteils 60 fluchtet, so dass eine in die Mutter 30 eingeschraubte Gewindestange 81 auf der Rückseite des Aufnahmeteils 60 entlang der Längsachse 99 aus dem Aufnahmeteil 60 austreten kann. Die Längsachse 99 verläuft durch die Aufnahme 61 und den in die Aufnahme 61 einmündenden Durchgang 15 hindurch.

Die Figuren 5 und 6 zeigen eine Befestigungsanordnung bestehend aus der Vorrichtung zur Drehmomentbegrenzung und einem Spreizanker 80. Bei solchen mechanischen Ankern kann eine Installation mit einer definierten Vorspannung durch ein Anziehen mit einem definierten Grenzdrehmoment beispielsweise zur Vermeidung von Abplatzungen im Substrat bei Montage in Randnähe relevant sein. Der Spreizanker 80 weist eine Gewindestange 81 sowie ein Spreizelement 89 auf, welches hier beispielhaft als eine die Gewindestange 81 umgebende Spreizhülse ausgeführt ist. An der Gewindestange 81 ist, insbesondere in einem vorderen Bereich, eine, vorzugsweise konische, Schrägfläche 88 angeordnet, welche sich nach hinten hin verjüngt. Zwischen der Schrägfläche 88 der Gewindestange 81 und dem Spreizelement 89 ist ein Keilgetriebe gebildet, welches eine axiale Relativbewegung der Gewindestange 81 zum Spreizelement 89 in eine radiale Bewegung des Spreizelements 89 umwandeln kann, und somit das Spreizelement 89 bei Zugbelastung in der Gewindestange 81 an der Wand eines Bohrlochs verankern kann.

In der Befestigungsanordnung der Figuren 5 und 6 ist die Mutter 30 der Vorrichtung zur Drehmomentbegrenzung auf die Gewindestange 81 des Spreizankers 80 aufgeschraubt, wobei die Gewindestange 81 des Spreizankers 80 die Vorrichtung zur Drehmomentbegrenzung durchläuft, also vorderseitig in die Vorrichtung eintritt und rückseitig aus der Vorrichtung austritt, und wobei die Schrägfläche 88 des Spreizankers 80 und das Spreizelement 89 des Spreizankers 80 der Vorrichtung zur Drehmomentbegrenzung vorgelagert sind.

Bei der Montage wird der Spreizanker 80 der Befestigungsanordnung durch Hammerschläge auf die Rückseite der Gewindestange 81, vorzugsweise durch eine Unterlegscheibe 9 hindurch, in ein Bohrloch eingehämmert. Mittels eines Setzwerkzeugs wird sodann über das Mitnahmeprofil 12 ein Drehmoment auf das Kopfteil 10 ausgeübt. Dieses Drehmoment wird über die Stege 40 auf das Aufnahmeteil 60 und vom Aufnahmeteil 60 weiter auf die Mutter 30 übertragen. Dies wiederum bewirkt eine Zugkraft in der Gewindestange 81 des Spreizankers 80, was wiederum das Spreizelement 89 radial belastet und hierdurch den Spreizanker 80 verankert.

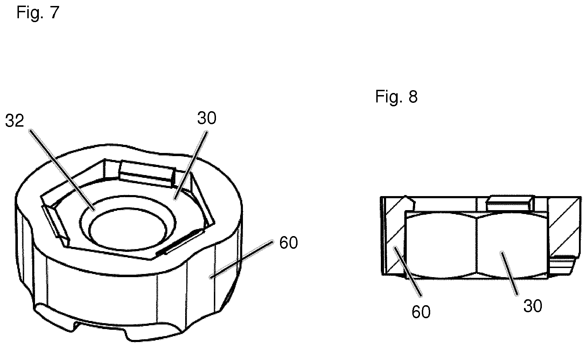

Erreicht das am Kopfteil 10 aufgebrachte Drehmoment ein vorbestimmtes Grenzdrehmoment, so scheren die Stege 40 ab, mit der Folge, dass das Kopfteil 10 vom Aufnahmeteil 60 abgetrennt wird und keine weitere Drehmomentübertragung mehr auf das Aufnahmeteil 60 und die Mutter 30 stattfindet. Die Vorrichtung zur Drehmomentbegrenzung wirkt daher als drehmomentbegrenzende Abreissmutter. Nach dem Abscheren der Stege 40 ist das Kopfteil 10 vom Aufnahmeteil 60 getrennt und fällt vom Aufnahmeteil 60 ab. Das überbleibende Aufnahmeteil 60 mit Mutter 30 ist in den Figuren 7 und 8 gezeigt.

Wie insbesondere in den Figuren 3, 4 und 6 erkennbar ist, weist das Kopfteil 10 einen Axialanschlag 51 auf, welcher an der rückwärtigen Stirnseite der Aufnahme 61 angeordnet ist, und welcher einen rückwärtigen Anschlag für die Mutter 30 bildet. Der Axialanschlag 51 begrenzt eine Axialbewegung der in der Aufnahme 61 aufgenommenen Mutter 30 relativ zum Kopfteil 10 nach hinten hin. Darüber hinaus ermöglicht der Axialanschlag 51 eine unmittelbare Übertragung von, beispielsweise beim Einhämmern auftretenden, Axialkräften vom Kopfteil 10 auf die Mutter 30, ohne die Stege 40 zu belasten. Der Axialanschlag 51 ist hier beispielhaft durch einen ringförmigen, vorzugsweise geschlossen ringförmigen, Vorsprung gebildet, welcher am Kopfteil 10 in die Aufnahme 61 vorsteht.

Wie Figur 3 zeigt ist die kleinste Wandstärke des dort sichtbaren Steges 40 in der in Figur 3 dargestellten Längsschnittsebene an der Wandstärken-Minimum-Strecke 45 gegeben, das heisst die Wandstärken-Minimum-Strecke 45 gibt den minimalen Abstand zwischen Aussenseite des Halteelements 1 und Innenseite des Halteelements 1 am Steg 40 in der Längsschnittsebene an. Wie insbesondere Figur 3 weiter zeigt endet die Wandstärken-Minimum-Strecke 45 auf der Innenseite des Halteelements 1 an der rückwärtigen Stirnseite der Aufnahme 61, nämlich an einer an der rückwärtigen Stirnseite der Aufnahme 61 im Steg 40 angeordneten Nut 44. Radial innenseitig an die Nut 44 schliesst sich der Axialanschlag 51 an. Die Nut 44 ist in der Längsschnittsebene hinterschneidungsfrei, was eine besonders einfache Fertigung in einem Gussverfahren erlaubt. Wie Figur 6 zeigt verläuft die Nut vorzugsweise darüber hinaus parallel zu den darüber beziehungsweise darunter liegenden Schlüsselflächen des Kopfteils 10 und/oder des Aufnahmeteils 60.

Wie insbesondere Figur 3 weiter zeigt verläuft die Wandstärken-Minimum-Strecke 45 unter einem spitzen, zum vorderen Ende der Vorrichtung zur Drehmomentbegrenzung hin konvergierenden Winkel α zur Längsachse 99, der grösser als 45° und kleiner als 90° ist, und im vorliegenden Beispiel etwa 60° beträgt. Da das Wandstärkenminimum, insbesondere bei Gussteilen, die Bruchlinie zumindest annähernd definiert, verläuft auch die Bruchlinie, an welcher der Steg 40 abschert, mit vergleichsweise grossem Öffnungswinkel zur Längsachse 99, das heisst vergleichsweise flach relativ zu einer senkrecht auf der Längsachse 99 stehenden Transversalebene. Durch diesen Bruchverlauf wird der Steg 40 beim Auftreten von Axialkräften geschont. Vorzugsweise verläuft die Wandstärken-Minimum-Strecke 45 in mehreren benachbarten Längsschnittsebenen unter einem Winkel grösser als 45° zur Längsachse 99, so dass im Ganzen eine relativ flach zur Transversalebene verlaufende Bruchfläche am Steg 40 gegeben ist.

Wie in Figur 4 angedeutet ist sind die beiden anderen, in Figur 3 nicht sichtbaren Stege 40 bezüglich ihrer Nuten und der Position ihrer jeweiligen Wandstärken-Minimum-Strecken analog zu dem in Figur 3 sichtbaren Steg 40 ausgeführt, so dass auch die beiden anderen Stege flach zur Transversalebene verlaufende Bruchflächen bilden.

## Patentansprüche

1. Vorrichtung zur Drehmomentbegrenzung, aufweisend eine Mutter (30) und ein Halteelement (1), wobei
das Halteelement (1) in einem rückwärtigen Bereich des Halteelements (1) ein Kopfteil (10) mit einem Mitnahmeprofil (12) zur drehfesten Kopplung des Kopfteils (10) mit einem Setzwerkzeug aufweist,
das Halteelement (1) in einem vorderen Bereich des Halteelements (1) ein Aufnahmeteil (60) mit einer Aufnahme (61) aufweist, in welcher die Mutter (30) drehfest aufgenommen ist,
das Kopfteil (10) einen Durchgang (15) aufweist, durch den eine in die Mutter (30) eingeschraubte Gewindestange entlang der Längsachse (99) der Vorrichtung durch das Kopfteil (10) hindurch aus dem Halteelement (1) herausführbar ist, und
das Halteelement (1) zumindest einen Steg (40) aufweist, welcher das Aufnahmeteil (60) und das Kopfteil (10) verbindet, und welcher eine Sollbruchstelle bildet,
**dadurch gekennzeichnet,**
**dass** in zumindest einer Längsschnittsebene der Vorrichtung die kleinste Wandstärke des zumindest einen Steges (40) auf einer Wandstärken-Minimum-Strecke (45) gegeben ist, welche unter einem Winkel (α) grösser 45° zu der Längsachse (99) der Vorrichtung verläuft.

2. Vorrichtung nach Anspruch 1,
**dadurch gekennzeichnet,**
**dass** in der zumindest einen Längsschnittsebene der Vorrichtung die Wandstärken-Minimum-Strecke (45) an einer rückwärtigen Stirnseite der Aufnahme (61) endet.

3. Vorrichtung nach einem der vorstehenden Ansprüche,
**dadurch gekennzeichnet,**
**dass** das Halteelement (1) zumindest eine Nut (44) aufweist, welche sich ausgehend von der Aufnahme (61) in das Halteelement (1) erstreckt, und welche entlang des zumindest einen Steges (40) verläuft, wobei die Wandstärken-Minimum-Strecke (45) an der Nut (44) endet.

4. Vorrichtung nach einem der vorstehenden Ansprüche,
**dadurch gekennzeichnet,**
**dass** das Kopfteil (10) zumindest einen Axialanschlag (51) aufweist, welcher einen rückwärtigen Anschlag für die Mutter (30) bildet.

5. Vorrichtung nach Anspruch 3 und 4,
**dadurch gekennzeichnet,**
**dass** die Nut (44) an den zumindest einen Axialanschlag (51) angrenzt.

6. Vorrichtung nach einem der vorstehenden Ansprüche,
**dadurch gekennzeichnet,**
**dass** die Wandstärke des zumindest einen Steges (40) in der zumindest einen Längsschnittsebene der Vorrichtung ein eindeutiges Minimum aufweist.

7. Vorrichtung nach einem der vorstehenden Ansprüche,
**dadurch gekennzeichnet,**
**dass** das Halteelement ein Gussteil ist.

8. Befestigungsanordnung bestehend aus einem Spreizanker (80) und einer Vorrichtung zur Drehmomentbegrenzung nach einem der vorstehenden Ansprüche, wobei die Mutter (30) der Vorrichtung auf eine Gewindestange (81) des Spreizankers (80) aufgeschraubt ist.
